Europäisches Patentamt

European Patent Office

Office européen des brevets

(19)

(11) Numéro de publication: **0 036 059**

**A1**

(12) # DEMANDE DE BREVET EUROPEEN

(21) Numéro de dépôt: **80810329.5**

(22) Date de dépôt: **31.10.80**

(51) Int. Cl.³: **G 09 B 19/16**
**G 07 C 5/12**

(30) Priorité: **20.02.80 CH 1351/80**

(43) Date de publication de la demande:
**23.09.81 Bulletin 81/38**

(84) Etats contractants désignés:
**AT BE CH DE FR GB IT LI LU NL SE**

(71) Demandeur: **Gurtner, Michel**
**18B, chemin François Chavaz**
**CH-1213 Onex(CH)**

(72) Inventeur: **Gurtner, Michel**
**18B, chemin François Chavaz**
**CH-1213 Onex(CH)**

(74) Mandataire: **Moinas, Michel**
**c/o Moinas & Cie Case Postale 88 5, rue Saint-Léger**
**CH-1211 Genève 4(CH)**

(54) **Appareil pour l'apprentissage et les examens de conduite automobile.**

(57) L'appareil mesure le freinage du véhicule et l'action de braquage sur les roues, accessoirement la vitesse et l'accélération ou le régime moteur.

Il enregistre graphiquement et simultanément ces mesures de façon que le conducteur puisse, le cas échéant, y repérer ses fautes.

Une alerte est activée lorsque simultanément le véhicule est freiné et ses roues sont braquées. Cette alerte est graphique, sonore ou lumineuse.

Application à l'apprentissage et aux examens de conduite.

EP 0 036 059 A1

./...

Fig. 2

- 1 -

0036059

## APPAREIL POUR L'APPRENTISSAGE
## ET LES EXAMENS
## DE CONDUITE AUTOMOBILE

-----------------

La présente invention a pour objet un appareil pour l'apprentissage et les examens de conduite, qui enregistre et présente graphiquement et simultanément le freinage et le braquage des roues du véhicule, accessoirement la vitesse, l'accélération ou le régime du moteur et, si désiré, le rapport enclenché sur la boîte de vitesses.

Lorsqu'un conducteur perd la maîtrise de son véhicule, on s'interroge sur les causes de cette faute grave. Si la perte de maîtrise a lieu en virage, les spécialistes s'accordent à dire que la vitesse était excessive, que le conducteur n'a pas eu le temps de rétrograder, qu'instinctivement il a freiné et braqué. Dans ce dernier cas, le conducteur, ne percevant pas et ne connaissant pas le comportement dynamique de son véhicule a eu une réaction incorrecte et inadaptée. Dès lors, une question se pose : par quels moyens vérifier si le conducteur sait manier son véhicule, s'il connait ou ne connait pas la technique et la dynamique de la conduite ; par quels moyens lui inculquer les bons réflexes ?

C'est précisément le but atteint par l'appareil selon l'invention, lequel comprend d'une part des moyens de mesure du freinage et de mesure du braquage des roues du véhicule, et d'autre part des moyens d'enregistrement graphique simultané desdites mesures.

Avantageusement, l'appareil enregistre et présente graphiquement d'autres données intéressantes, qui contribuent elles aussi à une bonne conduite, telles que la vitesse du véhicule et son accélération ou le régime de son moteur, ainsi que le rapport engagé sur la boîte de vitesses.

Dans un mode d'enregistrement et de représentation préféré, destiné à mieux visualiser les fautes et à contribuer ainsi, en les évitant systématiquement, à acquérir les bons réflexes, une alerte sous forme d'inscription graphique, de signal sonore ou lumineux, est actionnée quand simultanément le véhicule est freiné et les roues sont braquées. Par "braquage", on entend aussi bien le braquage proprement dit, dans le sens du virage, que le contre-braquage, en sens contraire. De préférence, l'enregistrement ne sera activé que si l'action de braquage est suffisante et suffisamment continue pour que celle-ci corresponde à une réelle mise en virage.

L'intérêt de l'appareil en relation avec les principes de conduite automobile sera mieux compris en regardant le dessin annexé, qui illustre également, à titre d'exemple, un mode d'enregistrement graphique des données captées par les moyens de mesure.

La figure 1 représente, en vue schématique, une route à deux voies comprenant un tronçon rectiligne séparé par une ligne de direction et un tronçon curviligne ou en virage séparé par une ligne de sécurité.

La figure 2 est une vue schématique d'une présentation de l'enregistrement des actions de conduite, telles que fournies par les moyens de mesure.

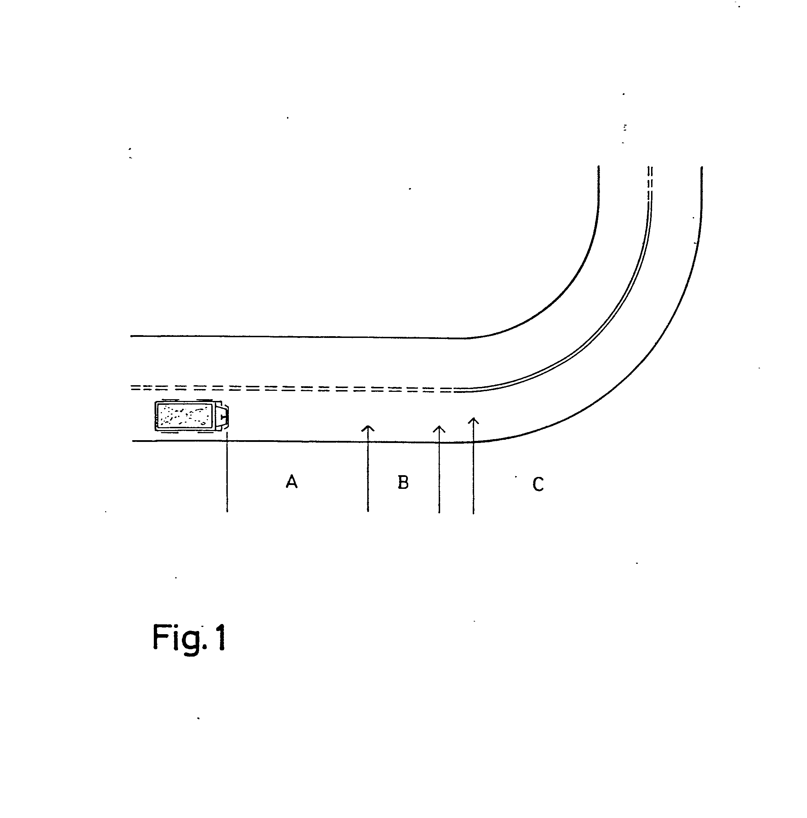

En référence à la figure 1 et aux lois dynamiques universellement connues, on sait que le conducteur doit rétrograder avant un virage brusque et que le véhicule doit être freiné dans la zone de freinage A pour que le transfert de charge s'opère de l'arrière sur l'avant ; ensuite, le véhicule arrivant dans la zone de restabilisation B, il retrouve son équilibre ; le véhicule roulant toujours en rectiligne, le conducteur commence à réaccélérer progressivement, puis, dès l'entrée du virage, il braque et accélère simultanément (zone C). En conduisant de cette manière, le conducteur perçoit et connaît le comportement dynamique de son véhicule. Il conduit correctement.

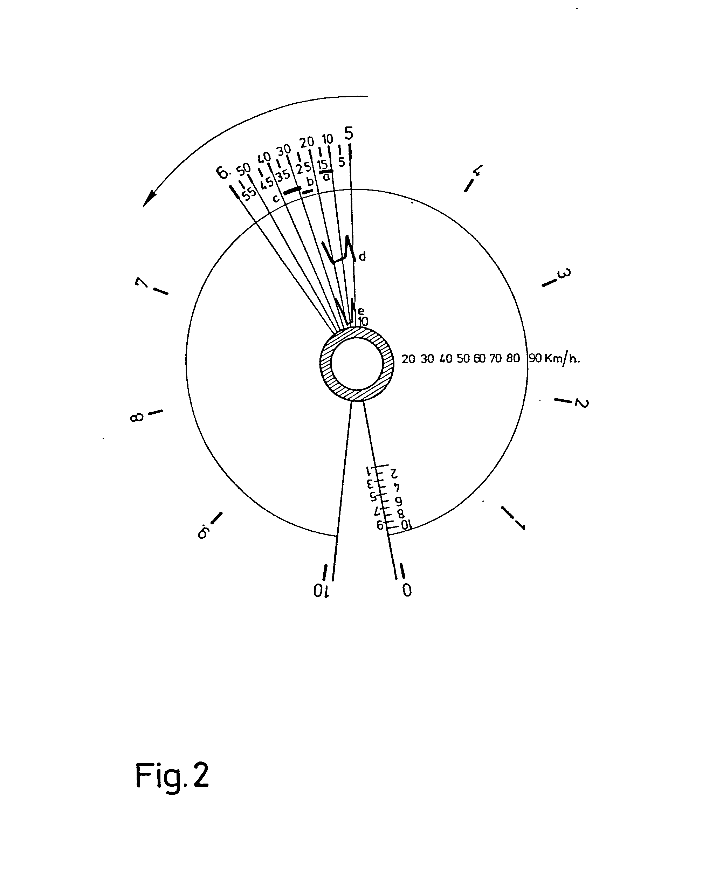

En référence à la figure 2, on a reproduit l'interface enregistrement et présentation graphiques de l'appareil, ressemblant extérieurement à un tachygraphe ou un taximètre tels qu'on les connaît sur les camions et les taxis. Elle se présente sur le dessin sous la forme d'un disque tournant en fonction du temps et sur lequel sont tracées des courbes ou éléments de courbe à l'aide de cinq stylographes non représentés.

Le premier stylographe inscrit sur le disque, en a, le freinage du véhicule, le captage pouvant se faire sur les circuits de freinage.

Le deuxième stylographe inscrit, en b, le braquage (ou le contre-braquage) du véhicule, le captage se faisant sur les organes de direction; c'est seulement à partir d'un certain braquage que le stylographe fonctionnera afin d'éviter toute inscription inutile, par exemple en faible courbe.

Le troisième stylographe, servant d'alerte, fonctionne uniquement, en c, lorsqu'il y a simultanément freinage, braquage ou contre-braquage; il peut être remplacé et/ou complété par un signal sonore ou lumineux.

Le quatrième stylographe inscrit, en d, la vitesse du véhicule sur le disque; il peut être branché sur le câble indiquant la vitesse du véhicule.

Le cinquième stylographe inscrit, en e, le régime du moteur, c'est-à-dire le ralenti, l'accélération et la décélération du véhicule sur le disque, il peut être branché sur le compte-tours.

Sur la figure 2, où sont représentées les échelles de temps, en minutes et secondes, de vitesse en km/h et d'accélération en m/s, la durée des enregistrements s'élève à 10 minutes par disque, après quoi le disque passe dans le couvercle de l'appareil en attendant d'être recueilli ultérieurement; automatiquement un nouveau disque apparaît, ainsi de suite. Les inscriptions laissées par les stylographes seront indélébiles et faciles à lire.

On lira quelques actions inscrites dès la cinquième minute, du centre vers l'extérieur, le quatrième stylographe inscrit, en d, la vitesse du véhicule; il est accompagné par le cinquième stylographe qui inscrit, en e, l'accélération, la décélération et le ralenti du moteur. Pour les tests de conduite économique et la lutte contre le bruit, les tracés inscrits par ces stylographes revêtent une certaine importance. Après 5 mn' 10 sec. on lit, en b, un freinage qui dure environ 5 secondes, inscrit par le premier stylographe. Ce freinage terminé, on lit presque simultanément trois nouvelles actions inscrites, la ré-accélération en e, la vitesse en d, le braquage et éventuellement le contre-braquage en b inscrit par le deuxième stylographe; puis une difficulté surgit subitement en virage ou en fin de virage, le conducteur freine et braque ou contre-braque simultanément, et la courbe c s'inscrit par le troisième stylographe. Comme rien n'a été inscrit, on voit que le moteur s'est arrêté et donc qu'il a calé.

- 5 -

0036059

De préférence, les enregistrements de chaque stylographe sont de couleurs différentes.

Dans la variante où il n'y a pas d'alerte graphique, en c, lorsque le conducteur fait la faute de braquer les roues et de freiner, cette faute se décèle aisément par le fait que les courbes a et b se correspondent sur tout ou partie d'un même secteur angulaire.

Avantageusement, la mise en marche et l'arrêt de l'appareil se fait avec une clef qui peut être retirée dans les deux positions après avoir commandé une position ou l'autre, de manière que le conducteur ne puisse librement modifier le fonctionnement de l'appareil pendant un test ou l'examen pratique de conduite. La mise en marche et l'arrêt de l'appareil est possible en roulant comme à l'arrêt.

Ainsi, pour un virage déterminé, l'appareil permettra de déceler le comportement du véhicule et du conducteur et d'enregistrer dans trois situations différentes: 1. La faute du conducteur qui freine, braque et contre-braque simultanément. 2. La faute du conducteur qui prend un virage en sous-régime ou sur-régime, par exemple en quatrième vitesse avec le moteur qui tourne à 1500 tours-minute ou en première vitesse avec le moteur qui tourne à 6000 tours-minute. 3. Le conducteur qui conduit correctement. On conçoit fort bien que cet appareil est à recommander pour l'apprentissage de la conduite, une partie de l'examen pratique de conduite et pour les cours de perfectionnement, en sanctionnant la façon de négocier un virage et en aidant le conducteur à comprendre la relation qui existe entre le régime du moteur et le choix des rapports de vitesse.

Les exercices pourront avoir lieu sur pistes, sur des places d'exercices spécialement aménagées, ou bien sur des routes dont les virages se prêtent à de tels enregistrements.

L'appareil peut comprendre des moyens pour enregistrer, inscrire et visualiser simultanément d'autres indications, directement sur le disque ou bien sur une bande de papier auxiliaire, à l'aide par exemple d'un mini-ordinateur. Citons à ce titre la position incorrecte du conducteur, détectée par des palpeurs incorporés dans le dossier du siège, ou le fait qu'il laisse reposer son pied sur la pédale d'embrayage. Citons aussi certains manquements et défectuosités qui n'ont pas été répérés par le conducteur alors qu'ils auraient dû l'être lors du contrôle extérieur avant l'installation au volant (roue desserée, niveaux d'essence, d'huile, d'eau, d'antigel, de liquide de frein et autres au minimum ou en dessous, phares, feux arrières ou clignotants ne fonctionnant pas). Citons encore les interventions du moniteur d'auto-école ou de l'examinateur à l'aide de la double commande.

Bien entendu, une hiérarchie peut être instaurée parmis ces indications secondaires, tout ou partie de celles-ci pouvant être omises en appuyant sur un bouton situé sur l'appareil.

Il est clair enfin que l'appareil en question peut être aussi bien adapté à la voiture automobile qu'au motocycle et au cytomoteur.

REVENDICATIONS

1. Appareil pour l'apprentissage et les examens de conduite automobile, caractérisé en ce qu'il comprend :
- d'une part au moins des moyens de mesure du freinage et des moyens de mesure du braquage des roues du véhicule, et
- d'autre part des moyens d'enregistrement graphique simultané desdites mesures.

2. Appareil selon la revendication 1, caractérisé en ce qu'il comprend aussi des moyens de mesure de la vitesse du véhicule, de son accélération ou du régime du moteur et les moyens correspondants d'enregistrement graphique.

3. Appareil selon la revendication 1 ou 2, caractérisé en ce qu'il comprend des moyens d'alerte activés lorsque simultanément le véhicule est freiné et ses roues sont braquées.

4. Appareil selon la revendication 3, caractérisé en ce que ces moyens d'alerte sont un enregistrement graphique, un signal sonore ou un signal lumineux.

5. Appareil selon la revendication 1 ou 3, caractérisé en ce que les moyens d'enregistrement comprennent des stylographes inscrivant sur un disque tournant en fonction du temps.

0036059

1/2

A    B    C

Fig. 1

Fig.2

0036059

2/2

Office européen
des brevets

**RAPPORT DE RECHERCHE EUROPEENNE**

| | **DOCUMENTS CONSIDERES COMME PERTINENTS** | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| X | US - A - 3 479 750 (RICHARD T. SWANSON) <br> * Colonne 3, lignes 20-24; 70-75; colonne 4, lignes 1-4; figure 1 * | 1,2 | G 09 B 19/16 <br> G 07 C 5/12 |
| | -- | | |
| | FR - A - 2 330 087 (MOTO METER GmbH) <br> * Page 1, lignes 1-17; page 2, lignes 31-39; page 3, lignes 1,2; figures 1,2 * | 1,5 | |
| | -- | | **DOMAINES TECHNIQUES RECHERCHES (Int. Cl. 3)** |
| | GB - A - 1 431 186 (FERDY MAYER) <br> * Page 1, lignes 14-29; page 4, lignes 4-64 * | 1,2 | G 09 B 19/16 <br> 19/14 <br> 9/04 <br> G 07 C 5/06 <br> 5/00 |
| | -- | | A 61 B 5/18 <br> G 07 C 5/08 |
| | FR - A - 2 200 997 (DE REVIERS DE MAUNY GUY LOUIS) <br> * Revendications * | 1,2 | 5/12 |
| | -- | | |
| | FR - A - 2 221 055 (ETS. JULES RICHARD) <br> * Page 1, lignes 31-36; page 4, lignes 6-29; figures 1,2 * | 1,2 | **CATEGORIE DES DOCUMENTS CITES** |
| | -- | | X. particulièrement pertinent <br> A: arrière-plan technologique <br> O: divulgation non-écrite <br> P: document intercalaire |
| | FR - A - 2 237 551 (RAYNE ANDRE) <br> * Revendications * | 2 | T théorie ou principe à la base de l'invention <br> E demande faisant interférence |
| | -- | | D document cité dans la demande <br> L document cité pour d'autres raisons |
| | AT - B - 301 225 (ALFONS BAUER) ./. | 2 | |
| | | | &. membre de la même famille, document correspondant |

| | Le présent rapport de recherche a été établi pour toutes les revendications | | |
|---|---|---|---|
| **Lieu de la recherche** La Haye | **Date d'achèvement de la recherche** 19-03-1981 | **Examinateur** MIOT | |

OEB Form 1503.1    06.78

**Office européen
des brevets**

**RAPPORT DE RECHERCHE EUROPEENNE**

| **DOCUMENTS CONSIDERES COMME PERTINENTS** | | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| | * Page 2, lignes 16-26; page 3, lignes 27-39; figures 1,2 * <br><br> -- <br><br> FR - A - 2 238 197 (KIENZLE APPARATE GmbH) <br> * Revendication 1 * <br><br> ----- | 4 | |
| | | | **DOMAINES TECHNIQUES RECHERCHES (Int. Cl. 3)** |

OEB Form 1503.2    06.78